# EUROPEAN PATENT SPECIFICATION

(11) **EP 4 501 727 B1**
(45) Date of publication and mention of the grant of the patent: **08.07.2026**
(21) Application number: 23717245.7
(22) Date of filing: 20.03.2023
(51) Int. Cl.: B60W 30/095, B60W 30/165, B60W 30/14, B60W 30/182, B60W 40/04

(54) **CONTROL DEVICE AND CONTROL METHOD FOR SADDLE RIDING TYPE VEHICLE**
STEUERUNGSVORRICHTUNG UND STEUERUNGSVERFAHREN FÜR SATTELFAHRZEUG
DISPOSITIF DE COMMANDE ET PROCÉDÉ DE COMMANDE POUR VÉHICULE DU TYPE À ENFOURCHER À SELLE

(30) Priority: 31.03.2022 JP 2022060081
(43) Date of publication of application: 05.02.2025
(73) Proprietor: Robert Bosch GmbH, 70442 Stuttgart (DE)
(72) Inventor: PFAU, Lars, Yokohama-shi, Kanagawa 224-8501 (JP)
(86) International application number: PCT/IB2023/052701
(87) International publication number: WO 2023/187546

(56) References cited:
- WO-A1-2012/091637
- WO-A1-2020/216490
- WO-A1-2021/260479

## Description

### Technical Field

The present invention relates to a controller for a straddle-type vehicle and a control method for a straddle-type vehicle.

### Background Art

A conventional controller for a straddle-type vehicle acquires positional relationship information between a traveling straddle-type vehicle and a target on the basis of output of at least one surrounding environment sensor that is mounted to the straddle-type vehicle, and executes rider-assistance operation to assist with driving by a rider of the straddle-type vehicle on the basis of the positional relationship information (for example, see PTL 1 and PTL 2) .

### Citation List

### Patent Literature

PTL 1: WO2018/172870A1
PTL 2: WO 2021/260479 A1
PTL 3: WO 2020/216490 A1
PTL 4: WO 2012/091637 A1

### Summary of Invention

### Technical Problem

A body of the straddle-type vehicle is much smaller than those of other vehicles (for example, a passenger car, a truck, and the like). Thus, such a situation possibly occurs where plural straddle-type vehicles travel in line and/or side by side in a unique positional relationship (for example, a situation where the plural straddle-type vehicles travel side by side in a single travel lane, a situation where the plural straddle-type vehicles travel while forming plural vehicle lines in the single travel lane, or the like) . In such a situation, it may be difficult for the conventional controller for the straddle-type vehicle to execute the appropriate rider-assistance operation.

The invention has been made with the above-described problem as the background and therefore obtains a controller capable of improving assistance performance for a rider. The invention also obtains a control method capable of improving the assistance performance for the rider.

### Solution to Problem

The present invention is set out by the appended claims. A controller according to the invention is a controller for a straddle-type vehicle and includes: an acquisition section that acquires surrounding environment information of a partial area in surroundings of the straddle-type vehicle on the basis of output of at least one surrounding environment sensor mounted to the straddle-type vehicle and acquires positional relationship information between the traveling straddle-type vehicle and a target on the basis of the surrounding environment information; and an execution section that executes rider-assistance operation to assist with driving by a rider of the straddle-type vehicle on the basis of the positional relationship information acquired by the acquisition section. In the case where a group travel mode as a mode in which the straddle-type vehicle travels with at least one other straddle-type vehicle in a group is not valid, the acquisition section acquires the positional relationship information in a first operation mode. In the case where the group travel mode is valid, the acquisition section acquires the positional relationship information in a second operation mode. The partial area that is subjected to acquisition of the surrounding environment information differs between the first operation mode and the second operation mode, output of the surrounding environment sensor is processed in the first operation mode, output of the different surrounding environment sensor from that in the first operation mode is processed in the second operation mode, and the surrounding environment information is thereby acquired.

A control method according to the invention is a control method for a straddle-type vehicle and incudes: an acquisition step in which an acquisition section of a controller acquires surrounding environment information of a partial area in surroundings of the straddle-type vehicle on the basis of output of at least one surrounding environment sensor mounted to the straddle-type vehicle and acquires positional relationship information between the traveling straddle-type vehicle and a target on the basis of the surrounding environment information; and an execution step in which an execution section of the controller executes rider-assistance operation to assist with driving by a rider of the straddle-type vehicle on the basis of the positional relationship information acquired in the acquisition step. In the acquisition step, in the case where a group travel mode as a mode in which the straddle-type vehicle travels with at least one other straddle-type vehicle in a group is not valid, the acquisition section acquires the positional relationship information in a first operation mode. In the case where the group travel mode is valid, the acquisition section acquire the positional relationship information in a second operation mode. The partial area that is subjected to acquisition of the surrounding environment information differs between the first operation mode and the second operation mode, output of the surrounding environment sensor is processed in the first operation mode, output of the different surrounding environment sensor from that in the first operation mode is processed in the second operation mode, and the surrounding environment information is thereby acquired.

### Advantageous Effects of Invention

In the controller and the control method according to the invention, for the rider-assistance operation, the positional relationship information is acquired in the first operation mode in a situation where the group travel mode is not valid, and the positional relationship information is acquired in the second operation mode in a situation where the group travel mode is valid. In addition, the partial area, which is subjected to the acquisition of the surrounding environment information, in the surroundings of the straddle-type vehicle differs between the first operation mode and the second operation mode. Therefore, it is possible to execute the appropriate rider-assistance operation in a situation where the plural straddle-type vehicles travel in line or side by side in a unique positional relationship, and it is thus possible to improve assistance performance for the rider.

### Brief Description of Drawings

Fig. 1 is a view illustrating a mounted state of a rider-assistance system according to an embodiment of the invention to a straddle-type vehicle.
Fig. 2 is a diagram illustrating a system configuration of the rider-assistance system according to the embodiment of the present invention.
Fig. 3 is a view for explaining the configuration of the rider-assistance system according to the embodiment of the present invention.
Fig. 4 is a view for explaining the configuration of the rider-assistance system according to the embodiment of the present invention.
Fig. 5 is a view for explaining the configuration of the rider-assistance system according to the embodiment of the present invention.
Fig. 6 is a view for explaining the configuration of the rider-assistance system according to the embodiment of the present invention.
Fig. 7 is a view for explaining the configuration of the rider-assistance system according to the embodiment of the present invention.
Fig. 8 is a chart for explaining an operation flow of a controller in the rider-assistance system according to the embodiment of the invention.

### Description of Embodiments

A description will hereinafter be made on a controller and a control method according to the invention with reference to the drawings.

A configuration, operation, and the like, which will be described below, merely constitute one example, and the controller and the control method according to the invention are not limited to a case with such a configuration, such operation, and the like.

For example, a description will hereinafter be made on a case where the controller and the control method according to the invention are used for a rider-assistance system of a two-wheeled motor vehicle. However, the controller and the control method according to the invention may be used for a rider-assistance system of a straddle-type vehicle other than the two-wheeled motor vehicle. The straddle-type vehicle means a vehicle that a rider drives while straddling a body thereof. Examples of the straddle-type vehicle are motorcycles (the two-wheeled motor vehicle and a threewheeled motor vehicle) and a pedal-driven vehicle. The motorcycles include a vehicle having an engine as a power source, a vehicle having an electric motor as the power source, and the like. Examples of the motorcycles are a motorbike, a scooter, and an electric scooter. The pedal-driven vehicle means a vehicle capable of traveling forward on a road by a depression force applied to pedals by the rider. Examples of the pedal-driven vehicle are a normal pedal-driven vehicle, an electrically-assisted pedal-driven vehicle, and an electric pedal-driven vehicle.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

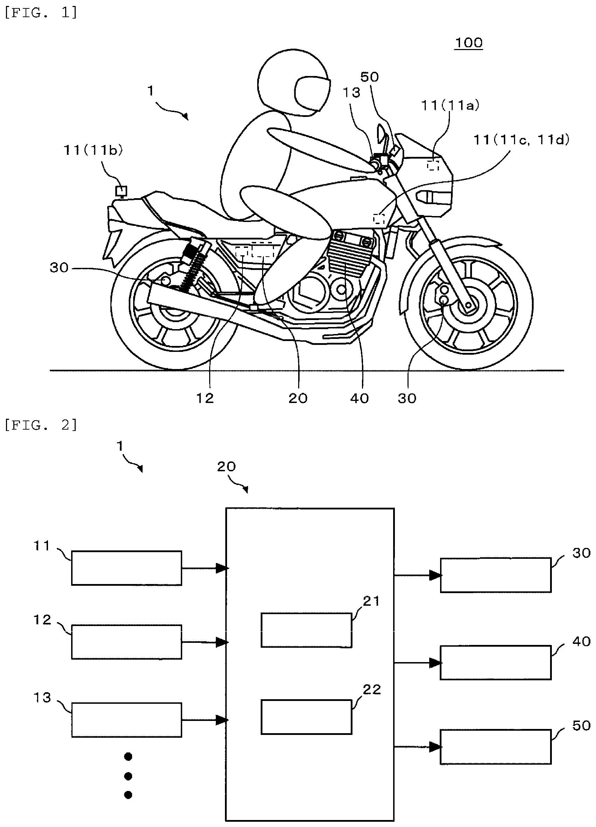

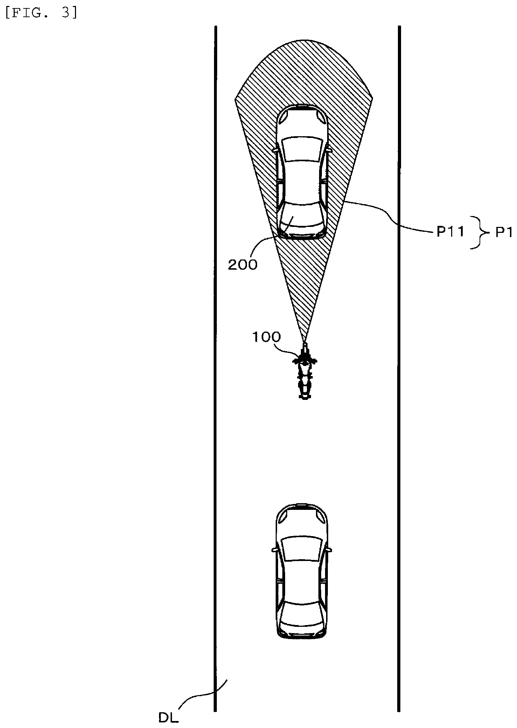

Fig. 1 is a view illustrating a mounted state of the rider-assistance system according to the embodiment of the invention to a straddle-type vehicle. Fig. 2 is a diagram illustrating a system configuration of the rider-assistance system according to the embodiment of the invention. Fig. 3 to Fig. 7 are views for explaining the configuration of the rider-assistance system according to the embodiment of the invention.

As illustrated in Fig. 1 and Fig. 2, a rider-assistance system 1 is mounted to a straddle-type vehicle 100. For example, the rider-assistance system 1 includes a surrounding environment sensor 11, a vehicle behavior sensor 12, a setting input device 13, a controller (ECU) 20, a brake system 30, a drive system 40, and a notification device 50.

In the rider-assistance system 1, the controller 20 executes rider-assistance operation to assist with driving by a rider of the straddle-type vehicle 100 by using output of the surrounding environment sensor 11 and the vehicle behavior sensor 12 and output of the setting input device 13. The controller 20 executes the rider-assistance operation by outputting commands to the various devices (for example, the brake system 30, the drive system 40, the notification device 50, and the like). When necessary, the controller 20 receives output of various sensors (not illustrated) for detecting other types of information (for example, information on an operation state of the brake system 30 by the rider, information on an operation state of the drive system 40 by the rider, and the like). Each component of the rider-assistance system 1 may exclusively be used for the rider-assistance system 1 or may be shared with another system.

For example, the surrounding environment sensor 11 may be a surrounding environment sensor 11a that faces the front of the straddle-type vehicle 100, may be a surrounding environment sensor 11b that faces the rear of the straddle-type vehicle 100, may be a surrounding environment sensor 11c that faces the left of the straddle-type vehicle 100, may be a surrounding environment sensor 11d that faces the right of the straddle-type vehicle 100, or may be a combination of those. As will be described below, at least one part of the surrounding environment sensors 11a, 11b, 11c, 11d is provided in plurality when necessary. Examples of the surrounding environment sensor 11 are a radar, a Lidar sensor, an ultrasonic sensor, and a camera. At least one part of the surrounding environment sensor 11c and the surrounding environment sensor 11d may be substituted by the surrounding environment sensor 11a or the surrounding environment sensor 11b.

Examples of the vehicle behavior sensor 12 are a vehicle speed sensor and an inertial measurement unit (IMU). The vehicle speed sensor detects a travel speed of the straddle-type vehicle 100. The vehicle speed sensor may detect another physical quantity that can substantially be converted to the travel speed of the straddle-type vehicle 100. The IMU detects acceleration in three axes (a front-rear direction, a right-left direction, and a vehicle height direction) and angular velocities in three axes (roll, pitch, and yaw) generated to the straddle-type vehicle 100. The IMU may detect other physical quantities that can substantially be converted to the three-axis acceleration and the three-axis angular velocities generated to the straddle-type vehicle 100. Alternatively, the IMU may partially detect the three-axis acceleration and the three-axis angular velocities.

The setting input device 13 accepts input of various settings by the rider. For example, the rider can switch between validity and invalidity of each of various types of the rider-assistance operation by using the setting input device 13. In addition, for example, the rider can set various modes or various threshold values that are used for the various types of the rider-assistance operation by using the setting input device 13. The setting input device 13 may accept an operation by the rider's body (for example, a hand, a foot, or the like) or may accept voice produced by the rider. In addition, the setting input device 13 may be provided to the straddle-type vehicle 100 or may be provided to an accessory (for example, a helmet, a glove, or the like) that is associated with the straddle-type vehicle 100.

The controller 20 at least includes an acquisition section 21 and an execution section 22. The sections of the controller 20 may collectively be provided in a single casing or may separately be provided in plural casings. In addition, the controller 20 as a whole or each of the sections of the controller 20 may be a microcomputer, a microprocessor unit, or the like, may be one whose firmware and the like can be updated, or may be a program module or the like that is executed by a command from a CPU or the like, for example.

When the rider-assistance operation is validated, the acquisition section 21 acquires surrounding environment information of a partial area in the surroundings of the straddle-type vehicle 100 on the basis of the output of at least one of the surrounding environment sensors 11 during travel of the straddle-type vehicle 100. The surrounding environment information includes information on a target that is located in the partial area. In the case where the validated rider-assistance operation is intended to assist with driving by the rider in response to an event that occurs in front of the straddle-type vehicle 100, an object (for example, a vehicle, an obstacle, a road facility, a person, an animal, or the like) that is located in front of the straddle-type vehicle 100 is determined as the target. In the case where the validated rider-assistance operation is intended to assist with driving by the rider in response to an event that occurs behind the straddle-type vehicle 100, an object (for example, the vehicle, the obstacle, the road facility, the person, the animal, or the like) that is located behind the straddle-type vehicle 100 is determined as the target. In the case where the validated rider-assistance operation is intended to assist with driving by the rider in response to an event that occurs on the side of the straddle-type vehicle 100, an object (for example, the vehicle, the obstacle, the road facility, the person, the animal, or the like) that is located on the side of the straddle-type vehicle 100 is determined as the target. The acquisition section 21 acquires positional relationship information between the straddle-type vehicle 100 and the target on the basis of the acquired surrounding environment information. Examples of the positional relationship information are information on a relative position, a relative distance, a relative speed, relative acceleration, relative jerk, a passing time difference, a predicted time until a collision, and presence or absence within a specified distance range. The positional relationship information may be information on another physical quantity that can substantially be converted to one of those.

The execution section 22 executes the rider-assistance operation to assist with driving by the rider of the straddle-type vehicle 100 on the basis of the positional relationship information that is acquired by the acquisition section 21.

The execution section 22 executes, as the rider-assistance operation, positional relationship adjustment operation to automatically change the travel speed of the straddle-type vehicle 100 on the basis of the positional relationship information between the straddle-type vehicle 100 and the target that is acquired by the acquisition section 21 and to thereby adjust a positional relationship between the straddle-type vehicle 100 and the target. The positional relationship adjustment operation is the rider-assistance operation to adjust the positional relationship in a front-rear direction of a travel lane. When executing the positional relationship adjustment operation, the execution section 22 automatically changes the travel speed of the straddle-type vehicle 100 by outputting a command to the brake system 30 or the drive system 40. The brake system 30 brakes the straddle-type vehicle 100. The drive system 40 as a power source of the straddle-type vehicle 100 drives the straddle-type vehicle 100. The brake system 30 may be controlled to generate or increase deceleration of the straddle-type vehicle 100 or may be controlled to generate or increase acceleration of the straddle-type vehicle 100. The drive system 40 may be controlled to generate or increase the acceleration of the straddle-type vehicle 100 or may be controlled to generate or increase the deceleration of the straddle-type vehicle 100. The positional relationship adjustment operation may be operation to automatically generate the deceleration or the acceleration to the straddle-type vehicle 100 without relying on the rider's operation of the brake system 30 and the drive system 40 and to thereby adjust the positional relationship between the straddle-type vehicle 100 and the target (for example, adaptive cruise control operation to set the target as a speed following target, operation to decelerate or accelerate the straddle-type vehicle 100 in order to avoid or mitigate a collision against the target, operation to actuate the brake system 30 in a state where the rider operates the drive system 40 in order to control the positional relationship with the target to the positional relationship corresponding to an operation amount of the drive system 40, operation to actuate the drive system 40 in a state where the rider operates the brake system 30 in order to control the positional relationship with the target to the positional relationship corresponding to an operation amount of the brake system 30, or the like), may be operation to automatically increase or reduce a braking force generated to the straddle-type vehicle 100 in order to correct excess or deficiency of the rider's operation of the brake system 30 and thereby adjust the positional relationship between the straddle-type vehicle 100 and the target, or may be operation to automatically increase or reduce drive power generated to the straddle-type vehicle 100 in order to correct excess or deficiency of the rider's operation of the drive system 40 and thereby adjust the positional relationship between the straddle-type vehicle 100 and the target.

When executing the positional relationship adjustment operation, the execution section 22 causes the notification device 50 to execute notification operation for the rider as necessary. The notification device 50 may notify the rider by display (that is, a sensation through a visual organ as a sensory organ), may notify the rider by sound (that is, a sensation through an auditory organ as the sensory organ), or may notify the rider by vibrations (that is, a sensation through a tactile organ as the sensory organ). Examples of the notification device 50 are a display, a lamp, a speaker, and a vibrator. The notification device 50 may be provided to the straddle-type vehicle 100 or may be provided to the accessory (for example, the helmet, the glove, or the like) that is associated with the straddle-type vehicle 100. In the rider-assistance operation that is executed by the execution section 22, the positional relationship adjustment operation may not be executed, and only the notification operation may be executed. In the notification operation, the execution section 22 preferably causes the notification device 50 to output a notification that urges the rider of the straddle-type vehicle 100 to correct the positional relationship between the straddle-type vehicle 100 and the target.

As illustrated in Fig. 3, in the case where the execution section 22 executes the rider-assistance operation in a normal state, that is, a state where it is determined that a group travel mode, which will be described below, is not valid, the acquisition section 21 acquires positional relationship information between the straddle-type vehicle 100 and a target 200 in a first operation mode. At the time, the acquisition section 21 acquires the surrounding environment information of a partial area P1 in the surroundings of the straddle-type vehicle 100. For example, the acquisition section 21 determines a vehicle that travels ahead of the straddle-type vehicle 100 as the target 200. More specifically, in the case where the validated rider-assistance operation is intended to assist with driving by the rider in response to the event that occurs in front of the straddle-type vehicle 100, the acquisition section 21 acquires the surrounding environment information of an area P11 in front of the straddle-type vehicle 100 on the basis of the output of the surrounding environment sensor 11a, and acquires the positional relationship information between the straddle-type vehicle 100 and the target 200 on the basis of the surrounding environment information. That is, the partial area P1 includes the area P11. The acquisition section 21 may acquire the surrounding environment information of the area P11 by using a detection result in an entire area within a viewing angle of the surrounding environment sensor 11a, or may acquire the surrounding environment information of the area P11 only by using a detection result in a partial area within the viewing angle of the surrounding environment sensor 11a.

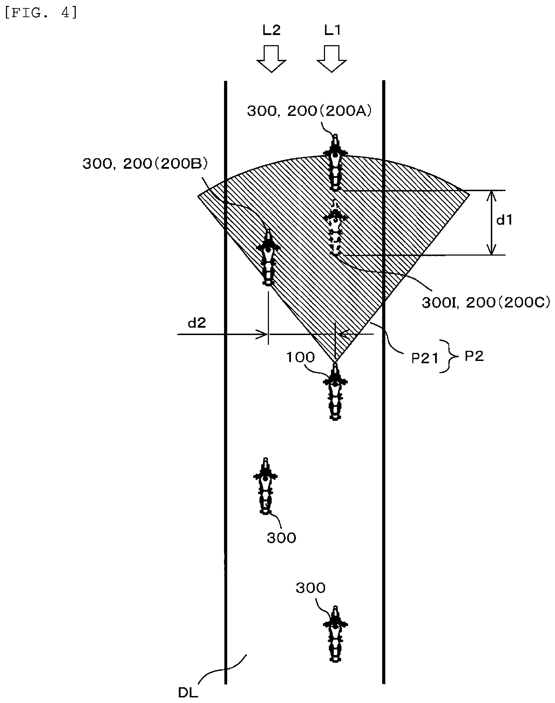

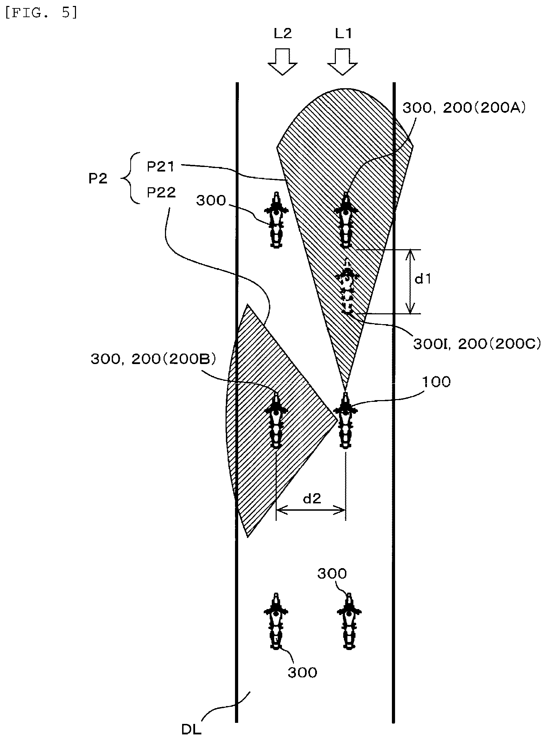

When the rider-assistance operation is validated, and/or during the execution of the rider-assistance operation, the acquisition section 21 determines whether the group travel mode is valid. As illustrated in Fig. 4 and Fig. 5, the group travel mode is a mode in which the straddle-type vehicle 100 travels with at least one other straddle-type vehicle 300 in a group, that is, in a team.

As a first example, validity or invalidity of the group travel mode is automatically switched on the basis of the output of at least one of the surrounding environment sensors 11. The acquisition section 21 determines whether the group travel mode is valid on the basis of information on the switchover. The acquisition section 21 processes the output of at least one of the surrounding environment sensors 11 and determines whether travel of the straddle-type vehicle 100 and the other straddle-type vehicle 300, which travels around the straddle-type vehicle 100, in a unique aspect (for example, an aspect as illustrated in Fig. 4 in which two vehicle lines are formed such that the straddle-type vehicle 100 and the plural other straddle-type vehicles 300 travel in a zig-zag arrangement, an aspect as illustrated in Fig. 5 in which the two vehicle lines are formed such that the straddle-type vehicle 100 and the plural other straddle-type vehicles 300 travel side by side, an aspect in which the straddle-type vehicle 100 and the one other straddle-type vehicle 300 travel in alignment in the front-rear direction, the right-left direction, or a diagonal direction, or the like) continues over a reference time or a reference travel distance. Then, if the determination is positive, the group travel mode is automatically validated. The acquisition section 21 may identify the other straddle-type vehicle 300 that is located in a travel lane DL in which the straddle-type vehicle 100 travels, and may only set the identified other straddle-type vehicle 300 as a determination target. Alternatively, the acquisition section 21 may identify the other straddle-type vehicle 300 that remains located around the straddle-type vehicle 100 over the reference time or the reference travel distance without using information on a boundary of the travel lane DL, and may set the identified other straddle-type vehicle 300 as the determination target.

As a second example, the validity or the invalidity of the group travel mode is switched by the rider's setting input. The acquisition section 21 acquires information on the setting as setting input information on the basis of the output of the setting input device 13. The acquisition section 21 determines whether the group travel mode is valid on the basis of the setting input information. Here, the execution section 22 may automatically suggest to validate and/or invalidate the group travel mode on the basis of the surrounding environment information that is acquired by the acquisition section 21, and the suggestion may be confirmed by the rider's setting input of acceptance.

In a state where it is determined that the group travel mode is valid, the execution section 22 executes the different rider-assistance operation from that in the normal state, that is, the state where it is determined that the group travel mode is not valid. A description will hereinafter be made on a case where, as an example, the validated rider-assistance operation is intended to assist with driving by the rider in response to the event that occurs in front of or on the side of the straddle-type vehicle 100 and where the execution section 22 executes, as the rider-assistance operation, the positional relationship adjustment operation to adjust the positional relationship with the other straddle-type vehicle 300 that travels ahead of the straddle-type vehicle 100 or the other straddle-type vehicle 300 that travels side by side with the straddle-type vehicle 100. The positional relationship adjustment operation is operation to adjust the positional relationship in the front-rear direction of the travel lane DL. A similar method is applied to a case where the validated rider-assistance operation is intended to assist with driving by the rider in response to the event that occurs behind the straddle-type vehicle 100 and where the execution section 22 executes, as the rider-assistance operation, the positional relationship adjustment operation to adjust the positional relationship with the other straddle-type vehicle 300 that follows the straddle-type vehicle 100. In addition, in the rider-assistance operation, the execution section 22 may execute the notification operation in addition to the positional relationship adjustment operation, or may only execute the notification operation without executing the positional relationship adjustment operation.

As a first example, a description will be made on the determination of the target 200 in the case where the positional relationship adjustment operation is executed to adjust the positional relationship between the straddle-type vehicle 100 and the one other straddle-type vehicle 300, which travels with the straddle-type vehicle 100 in the group, in the front-rear direction of the travel lane DL.

Based on the surrounding environment information acquired by the acquisition section 21, the execution section 22 identifies the other straddle-type vehicle 300, which travels with the straddle-type vehicle 100 in the group, from vehicles located around the straddle-type vehicle 100. The determination on whether the other straddle-type vehicle 300 is the vehicle that travels with the straddle-type vehicle 100 in the group may be made on the basis of information that is registered by the rider in advance (for example, location information of the straddle-type vehicle 100 in the group, identification information of the other straddle-type vehicle 300 that belongs to the group, and the like), or may be made on the basis of information on time course of the positional relationship with the straddle-type vehicle 100.

As illustrated in Fig. 4 and Fig. 5, for example, the execution section 22 determines, as the target 200 (denoted as 200A in Fig. 4 and Fig. 5), the other straddle-type vehicle 300 that belongs to a first vehicle line L1, to which the straddle-type vehicle 100 in the group belongs, and that travels ahead of the straddle-type vehicle 100 at the nearest location to the straddle-type vehicle 100. In addition, for example, the execution section 22 determines, as the target 200 (denoted as 200B in Fig. 4 and Fig. 5), the other straddle-type vehicle 300 that belongs to a second vehicle line L2, to which the straddle-type vehicle 100 in the group does not belong, and that travels ahead of or side by side with the straddle-type vehicle 100 at the nearest location to the straddle-type vehicle 100. The execution section 22 identifies to which of the right and left vehicle lines in the travel lane DL the straddle-type vehicle 100 belongs on the basis of the information that is registered by the rider in advance (for example, the location information of the straddle-type vehicle 100 in the group, or the like) or on the basis of the information on the time course of the positional relationship with the plural other straddle-type vehicles 300, that is, uses group vehicle line information. In this way, the execution section 22 can identify the other straddle-type vehicle 300 that belongs to the first vehicle line L1 and the other straddle-type vehicle 300 that belongs to the second vehicle line L2.

As a second example, a description will be made on the determination of the target 200 in the case where the positional relationship adjustment operation is executed to adjust the positional relationship between the straddle-type vehicle 100 and the plural other straddle-type vehicles 300, each of which travels with the straddle-type vehicle 100 in the group, in the front-rear direction of the travel lane DL.

Based on the surrounding environment information acquired by the acquisition section 21, the execution section 22 identifies the other straddle-type vehicles 300, each of which travels with the straddle-type vehicle 100 in the group, from the vehicles located around the straddle-type vehicle 100. The determination on whether the other straddle-type vehicles 300 are the vehicles, each of which travels with the straddle-type vehicle 100 in the group, may be made on the basis of the information that is registered by the rider in advance (for example, the location information of the straddle-type vehicle 100 in the group, the identification information of the other straddle-type vehicles 300 that belong to the group, and the like), or may be made on the basis of the information on the time course of the positional relationship with the straddle-type vehicle 100.

As illustrated in Fig. 4 and Fig. 5, for example, the execution section 22 determines, as the target 200 (denoted as 200C in Fig. 4 and Fig. 5), a single imaginary vehicle 300I that represents the other straddle-type vehicle 300 belonging to the first vehicle line L1, to which the straddle-type vehicle 100 in the group belongs, and traveling ahead of the straddle-type vehicle 100 at the nearest location to the straddle-type vehicle 100 and the other straddle-type vehicle 300 belonging to the second vehicle line L2, to which the straddle-type vehicle 100 in the group does not belong, and traveling ahead of or side by side with the straddle-type vehicle 100 at the nearest location to the straddle-type vehicle 100. The execution section 22 identifies to which of the right and left vehicle lines in the travel lane DL the straddle-type vehicle 100 belongs on the basis of the information that is registered by the rider in advance (for example, information on a travel location of the straddle-type vehicle 100 in the group, or the like) or on the basis of the information on the time course of the positional relationship with each of the plural other straddle-type vehicles 300, that is, uses the group vehicle line information. In this way, the execution section 22 can identify the other straddle-type vehicle 300 that belongs to the first vehicle line L1 and the other straddle-type vehicle 300 that belongs to the second vehicle line L2. The imaginary vehicle 300I is a vehicle that is imagined as the other straddle-type vehicle 300 (denoted as 200A in Fig. 4 and Fig. 5) as follows. The other straddle-type vehicle 300 that belongs to the first vehicle line L1, to which the straddle-type vehicle 100 in the group belongs, and that travels ahead of the straddle-type vehicle 100 at the nearest location to the straddle-type vehicle 100 travels at a location shifted by a distance d1 in the front-rear direction of the travel lane DL. The imaginary vehicle 300I may be shifted in a manner to approach the straddle-type vehicle 100 (that is, such that the distance d1 obtains a positive value) or may be shifted in a manner to move away from the straddle-type vehicle 100 (that is, such that the distance d1 obtains a negative value). The distance d1 is a value that fluctuates according to a distance d2 between the straddle-type vehicle 100 and the other straddle-type vehicle 300 (denoted as 200B in Fig. 4 and Fig. 5), which belongs to the second vehicle line L2, to which the straddle-type vehicle 100 in the group does not belong, and travels ahead of or side by side with the straddle-type vehicle 100 at the nearest location to the straddle-type vehicle 100, in a width direction of the travel lane DL. For example, as the distance d2 is reduced, the distance d1 is increased. A relationship between the distance d1 and the distance d2 may not fluctuate, may fluctuate according to a travel state of the straddle-type vehicle 100, or may fluctuate according to the setting input by the rider of the straddle-type vehicle 100. In addition, the imaginary vehicle 300I may represent three or more other straddle-type vehicles 300.

After determining the target 200, the execution section 22 executes the positional relationship adjustment operation to automatically change the travel speed of the straddle-type vehicle 100 on the basis of the positional relationship information between the straddle-type vehicle 100 and the target 200 that is acquired by the acquisition section 21 and to thereby adjust a positional relationship between the straddle-type vehicle 100 and the target 200.

Here, in the case where the execution section 22 executes the rider-assistance operation in the state where it is determined that the group travel mode is valid, the acquisition section 21 acquires the positional relationship information between the straddle-type vehicle 100 and the target 200 in a second operation mode. A partial area P2 that is subjected to the acquisition of the surrounding environment information in the second operation mode differs from the partial area P1 that is subjected to the acquisition of the surrounding environment information in the first operation mode.

As a first example, as illustrated in Fig. 4, the acquisition section 21 acquires the surrounding environment information of an area P21 in front of the straddle-type vehicle 100 on the basis of the output of the surrounding environment sensor 11, and acquires the positional relationship information between the straddle-type vehicle 100 and the target 200 on the basis of the surrounding environment information. That is, the partial area P2 includes the area P21. The area P21 includes an area where the other straddle-type vehicle 300, which belongs to the second vehicle line L2, to which the straddle-type vehicle 100 in the group does not belong, and which travels ahead of the straddle-type vehicle 100 at the nearest location to the straddle-type vehicle 100, is assumed to be located. Compared to the area P11 illustrated in Fig. 3, the area P21 is an area that spreads in the width direction and is close to the straddle-type vehicle 100. When acquiring the surrounding environment information of the partial area P2, the acquisition section 21 may use the output of the same surrounding environment sensor 11 in the first operation mode and the second operation mode, or may use the output of the different surrounding environment sensor 11 between the first operation mode and the second operation mode. In the case where the output of the same surrounding environment sensor 11 is used, for example, in the first operation mode, the acquisition section 21 acquires the surrounding environment information of the area P11 by using only the detection result in the partial area within the viewing angle of the surrounding environment sensor 11a, and in the second operation mode, the acquisition section 21 acquires the surrounding environment information of the area P21 by using the detection result in the entire area within the viewing angle of the surrounding environment sensor 11a or only a detection result in a larger area than the area used in the first operation mode within the viewing angle of the surrounding environment sensor 11a. The viewing angle of the surrounding environment sensor 11a itself may be changed. Meanwhile, in the case where the output of the different surrounding environment sensors 11 is used, for example, in the first operation mode, the acquisition section 21 processes the output of the surrounding environment sensor 11a, the viewing angle of which is narrow and a detectable distance of which is long, and acquires the surrounding environment information of the area P11, and in the second operation mode, the acquisition section 21 processes the output of the surrounding environment sensor 11a, the viewing angle of which is wide and the detectable distance of which is short, and acquires the surrounding environment information of the area P21. In the first operation mode and/or the second operation mode, actuation of the surrounding environment sensor 11, the output of which is not used, may or may not be stopped. In the case where the actuation of the surrounding environment sensor 11, the output of which is not used, is not stopped, such output may or may not be used for another function.

As a second example, as illustrated in Fig. 5, the acquisition section 21 acquires the surrounding environment information of an area P22 on the side of the straddle-type vehicle 100 on the basis of the output of the surrounding environment sensor 11, and acquires the positional relationship information between the straddle-type vehicle 100 and the target 200 on the basis of the surrounding environment information. That is, the partial area P2 includes the area P22. The area P22 includes an area where the other straddle-type vehicle 300, which belongs to the second vehicle line L2, to which the straddle-type vehicle 100 in the group does not belong, and which travels side by side with the straddle-type vehicle 100 at the nearest location to the straddle-type vehicle 100, is assumed to be located. Compared to the area P11 illustrated in Fig. 3, the area P22 is an area that spreads in the width direction and is close to the straddle-type vehicle 100. The acquisition section 21 may acquire the surrounding environment information of the area P21 in front of the straddle-type vehicle 100 instead of or in addition to the area P22 on the side of the straddle-type vehicle 100 on the basis of the output of the surrounding environment sensor 11, and may acquire the positional relationship information between the straddle-type vehicle 100 and the target 200 on the basis of the surrounding environment information. The area P21 and the area P22 may be located away from each other or may overlap each other. That is, the partial area P2 may include the area P21. When acquiring the surrounding environment information of the partial area P2, the acquisition section 21 may use the output of the same surrounding environment sensor 11 in the first operation mode and the second operation mode, or may use the output of the different surrounding environment sensor 11 between the first operation mode and the second operation mode. In the case where the output of the same surrounding environment sensor 11 is used, for example, in the first operation mode, the acquisition section 21 acquires the surrounding environment information of the area P11 by using only the detection result in the partial area within the viewing angle of the surrounding environment sensor 11a, and in the second operation mode, the acquisition section 21 acquires the surrounding environment information of the area P21 and/or the area P22 by using the detection result in the entire area within the viewing angle of the surrounding environment sensor 11a or only the detection result in the larger area than the area used in the first operation mode within the viewing angle of the surrounding environment sensor 11a. The viewing angle of the surrounding environment sensor 11a itself may be changed. In the case where the output of the different surrounding environment sensors 11 is used, for example, in the first operation mode, the acquisition section 21 processes the output of the surrounding environment sensor 11a, the viewing angle of which is narrow and the detectable distance of which is long, and acquires the surrounding environment information of the area P11, and in the second operation mode, the acquisition section 21 processes the output of the surrounding environment sensor 11a, the viewing angle of which is wide and the detectable distance of which is short, or the output of the surrounding environment sensor 11c or the surrounding environment sensor 11d, a viewing angle of which is wide and a detectable distance of which is short, and acquires the surrounding environment information of the area P21 and/or the area P22. In the first operation mode and/or the second operation mode, the actuation of the surrounding environment sensor 11, the output of which is not used, may or may not be stopped. In the case where the actuation of the surrounding environment sensor 11, the output of which is not used, is not stopped, such output may or may not be used for another function.

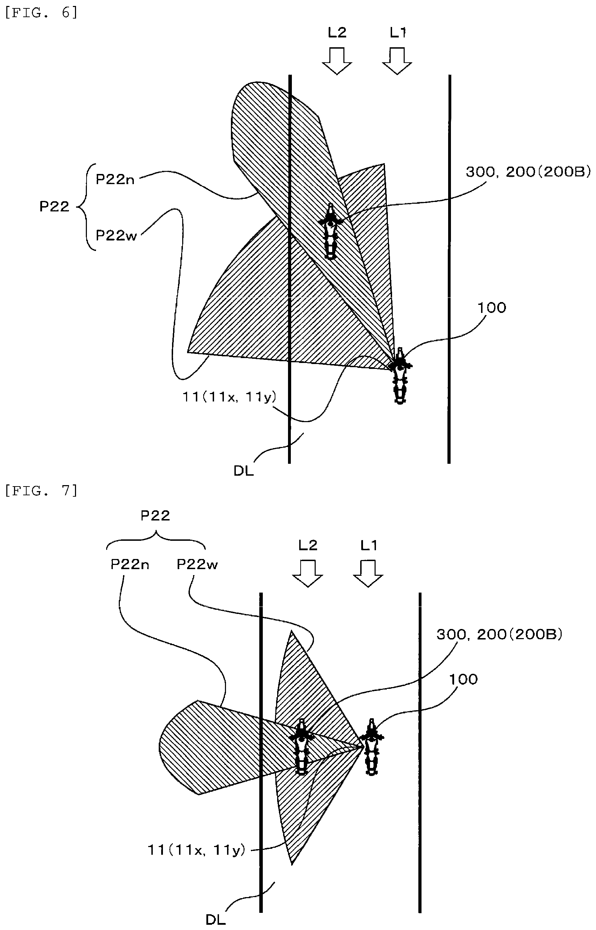

As illustrated in Fig. 6 and Fig. 7, when acquiring the surrounding environment information of the area P22 on the side of the straddle-type vehicle 100 in the second operation mode as described as the first or second example, the acquisition section 21 preferably uses output of a first surrounding environment sensor 11x, a viewing angle of which is narrow and a detectable distance of which is long, and output of a second surrounding environment sensor 11y, a viewing angle of which is wide and a detectable distance of which is short. The first surrounding environment sensor 11x and the second surrounding environment sensor 11y may be two surrounding environment sensors 11c that face the same side of the right or left side of the straddle-type vehicle 100, or may be two surrounding environment sensors 11d that face the same side of the right or left side of the straddle-type vehicle 100. In addition to the first surrounding environment sensor 11x and the second surrounding environment sensor 11y, the other surrounding environment sensor 11 may be used. In other words, the area P22 on the side of the straddle-type vehicle 100 that is subjected to the acquisition of the surrounding environment information in the second operation mode can include an area P22n, the surrounding environment information of which is acquired by using the output of the first surrounding environment sensor 11x, and an area P22w, the surrounding environment information of which is acquired by using the output of the second surrounding environment sensor 11y. Compared to the area P22n, the area P22w is an area that spreads in the width direction and is close to the straddle-type vehicle 100. The area P22n and the area P22w may be located away from each other or may overlap each other. In the second operation mode, both of the output of the first surrounding environment sensor 11x and the output of the second surrounding environment sensor 11y may or may not always be used. The actuation of the surrounding environment sensor 11, the output of which is not used, may or may not be stopped. In the case where the actuation of the surrounding environment sensor 11, the output of which is not used, is not stopped, such output may or may not be used for another function. The execution section 22 executes the different rider-assistance operation between the case where the target (particularly, the other straddle-type vehicle 300) is detected at least by the first surrounding environment sensor 11x and the case where the target (particularly, the other straddle-type vehicle 300) is detected not by the first surrounding environment sensor 11x but by the second surrounding environment sensor 11y.

For example, in a state where the other straddle-type vehicle 300, which belongs to the second vehicle line L2, to which the straddle-type vehicle 100 in the group does not belong, and travels ahead of or side by side with the straddle-type vehicle 100 at the nearest location to the straddle-type vehicle 100, that is, the target 200 is detected by both of the first surrounding environment sensor 11x and the second surrounding environment sensor 11y or only by the first surrounding environment sensor 11x, the execution section 22 executes the positional relationship adjustment operation described above. Then, in the case where the first surrounding environment sensor 11x no longer detects the target 200 and only the second surrounding environment sensor 11y detects the target 200 immediately thereafter or before a lapse of the reference time, the execution section 22 executes the different rider-assistance operation from the above-described positional relationship adjustment operation. As an additional condition in which the different rider-assistance operation is executed, it may be checked whether the target 200, which is no longer detected by the first surrounding environment sensor 11x, is located at a shorter distance than a reference distance from the straddle-type vehicle 100 preferably in the front-rear direction and/or the right-left direction of the straddle-type vehicle 100, or it may be checked whether a relative speed to the straddle-type vehicle 100 falls below a reference value. Alternatively, as the additional condition in which the different rider-assistance operation is executed, it may be checked whether the target 200 detected by the first surrounding environment sensor 11x and the target 200 detected by the second surrounding environment sensor 11y are located on the same side of the right or left side of the straddle-type vehicle 100, or it may be checked whether the target 200 detected by the first surrounding environment sensor 11x and the target 200 detected by the second surrounding environment sensor 11y are located at substantially the same distance from the straddle-type vehicle 100 preferably in the front-rear direction and/or the right-left direction of the straddle-type vehicle 100. In the different rider-assistance operation, until the reference time elapses or the target 200 is detected by the first surrounding environment sensor 11x, the acceleration of the straddle-type vehicle 100 may be prohibited, the travel speed of the straddle-type vehicle 100 may be maintained at a constant speed, the straddle-type vehicle 100 may preferably be decelerated at the constant deceleration, or a set value in the positional relationship adjustment operation may be changed such that the positional relationship between the straddle-type vehicle 100 and the target 200 has a separating tendency. That is, in the different rider-assistance operation, the positional relationship between the straddle-type vehicle 100 and the target 200 is preferably suppressed from having an approaching tendency by the positional relationship adjustment operation. The different rider-assistance operation may be executed immediately after the target 200 is no longer detected by the first surrounding environment sensor 11x.

In the case where the execution section 22 executes the positional relationship adjustment operation in the state where it is determined that the group travel mode is not valid, the acquisition section 21 acquires the positional relationship information between the straddle-type vehicle 100 and the target 200, the positional relationship of which with the straddle-type vehicle 100 is adjusted, in the first operation mode, that is, on the basis of the surrounding environment information of the partial area P1. Here, the acquisition section 21 preferably determines whether the group travel mode is valid on the basis of the surrounding environment information of the partial area P2 that includes the area P22 on the side of the straddle-type vehicle 100. The determination may be made in a state where it is determined that the group travel mode is not valid, may be made in a state where it is determined that the group travel mode is valid, or may be made in a state where the positional relationship adjustment operation is not validated. The area P22 on the side includes: the area P22n, the surrounding environment information of which is acquired by using the output of the first surrounding environment sensor 11x; and the area P22w, the surrounding environment information of which is acquired by using the output of the second surrounding environment sensor 11y. Then, in the case where the target (particularly, the other straddle-type vehicle 300) is not detected by the first surrounding environment sensor 11x and the target (particularly, the other straddle-type vehicle 300) is detected by the second surrounding environment sensor 11y, the acquisition section 21 preferably suspends the determination on whether the group travel mode is valid until the reference time elapses from time at which such a case is established. During the suspension, the determination result that the group travel mode is valid may be maintained, or the determination result in the state where the target (particularly, the other straddle-type vehicle 300) is detected at least by the first surrounding environment sensor 11x immediately before the above case is established may be maintained.

In the case where the execution section 22 executes the positional relationship adjustment operation in the state where it is determined that the group travel mode is not valid, the acquisition section 21 acquires the positional relationship information between the straddle-type vehicle 100 and the target 200, the positional relationship of which with the straddle-type vehicle 100 is adjusted, in the first operation mode, that is, on the basis of the surrounding environment information of the partial area P1. Here, in the case where the group travel mode is valid, the acquisition section 21 preferably acquires the group vehicle line information on the basis of the surrounding environment information of the partial area P2 that includes the area P22 on the side of the straddle-type vehicle 100. In addition, the execution section 22 preferably executes the positional relationship adjustment operation on the basis of the positional relationship information between the straddle-type vehicle 100 and the target 200, the positional relationship of which with the straddle-type vehicle 100 is adjusted, and the vehicle line information acquired by the acquisition section 21. That vehicle line information may be acquired in a state where the positional relationship adjustment operation is not validated. The area P22 on the side includes: the area P22n, the surrounding environment information of which is acquired by using the output of the first surrounding environment sensor 11x; and the area P22w, the surrounding environment information of which is acquired by using the output of the second surrounding environment sensor 11y. Examples of the group vehicle line information are information on to which of the right and left vehicle lines in the travel lane DL the straddle-type vehicle 100 belongs and information on to which of the right and left vehicle lines the other straddle-type vehicle 300, which travels ahead of or side by side with the straddle-type vehicle 100 at the nearest location to the straddle-type vehicle 100, belongs. Then, in the case where the target (particularly, the other straddle-type vehicle 300) is not detected by the first surrounding environment sensor 11x and the target (particularly, the other straddle-type vehicle 300) is detected by the second surrounding environment sensor 11y, the acquisition section 21 preferably suspends the acquisition of the vehicle line information. During the suspension, the vehicle line information immediately before the establishment of such a case may be used.

### <Operation of Rider-Assistance System>

A description will be made on operation of the rider-assistance system according to the embodiment.

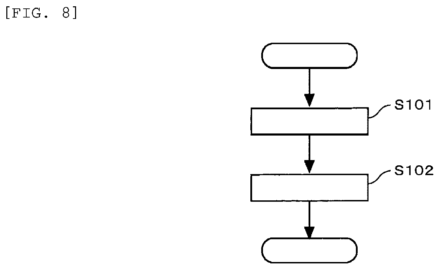

Fig. 8 is a chart for explaining an operation flow of the controller in the rider-assistance system according to the embodiment of the invention.

The controller 20 executes the operation flow illustrated in Fig. 8 during the travel of the straddle-type vehicle 100.

### (Acquisition Step)

In step S101, in the case where the group travel mode is not valid, in the first operation mode, that is, on the basis of the output of at least one of the surrounding environment sensors 11 mounted to the straddle-type vehicle 100, the acquisition section 21 acquires the surrounding environment information of the partial area P1 in the surroundings of the straddle-type vehicle 100, and then acquires the positional relationship information between the traveling straddle-type vehicle 100 and the target 200 on the basis of the surrounding environment information. Meanwhile, in the case where the group travel mode is valid, in the second operation mode, that is, on the basis of the output of at least one of the surrounding environment sensors 11 mounted to the straddle-type vehicle 100, the acquisition section 21 acquires the surrounding environment information of the partial area P2 in the surroundings of the straddle-type vehicle 100, and then acquires the positional relationship information between the traveling straddle-type vehicle 100 and the target 200 on the basis of the surrounding environment information. The acquisition section 21 also acquires the various types of the information when necessary.

### (Execution Step)

In step S102, the execution section 22 executes the rider-assistance operation on the basis of the positional relationship information that is acquired in step S101.

### <Effects of Rider-Assistance System>

A description will be made on effects of the rider-assistance system according to the embodiment.

In the controller 20, for the rider-assistance operation, the positional relationship information is acquired in the first operation mode in the situation where the group travel mode is not valid, and the positional relationship information is acquired in the second operation mode in the situation where the group travel mode is valid. In the first operation mode and the second operation mode, the partial area P1 and the partial area P2, each of which is subjected to the acquisition of the surrounding environment information, in the surroundings of the straddle-type vehicle 100 differ. Therefore, it is possible to execute the appropriate rider-assistance operation in the situation where the plural straddle-type vehicles 100, 300 travel in line or side by side in the unique positional relationship, and it is thus possible to improve assistance performance for the rider.

The description has been made so far on the embodiment. However, modifications are possible within the scope of the invention, as defined by the appended claims. In other words, the invention is not limited to the embodiment that has been described.

For example, the description has been made so far on the case where, as the positional relationship adjustment operation, the execution section 22 executes the operation to adjust the positional relationship between the straddle-type vehicle 100 and the target 200 in the front-rear direction of the travel lane DL. However, the execution section 22 may execute, as the positional relationship adjustment operation, operation to adjust the positional relationship between the straddle-type vehicle 100 and the target 200 in the width direction of the travel lane DL. In such a case, preferably, the controller 20 outputs a command to a drive mechanism that is added to a steering system of the straddle-type vehicle 100, and executes the rider-assistance operation.

### Reference Signs List

1: Rider-assistance system
11, 11a to d: Surrounding environment sensor
11x: First surrounding environment sensor
11y: Second surrounding environment sensor
12: Vehicle behavior sensor
13: Setting input device
20: Controller
21: Acquisition section
22: Execution section
30: Brake system
40: Drive system
50: Notification device
100: Straddle-type vehicle
200: Target
300: Other straddle-type vehicle
300I: Imaginary vehicle
DL: Travel lane
L1: First vehicle line
L2: Second vehicle line
P1, P2: Partial area
P11, P21, P22, P22n, P22w: Area
d1, d2: Distance

## Claims

1. A controller (20) for a straddle-type vehicle (100), the controller (20) comprising:
an acquisition section (21) that acquires surrounding environment information of a partial area (P1, P2) in surroundings of the straddle-type vehicle (100) on the basis of output of at least one surrounding environment sensor (11) mounted to the straddle-type vehicle (100) and acquires positional relationship information between the traveling straddle-type vehicle (100) and a target (200) on the basis of the surrounding environment information; and
an execution section (22) that executes rider-assistance operation to assist with driving by a rider of the straddle-type vehicle (100) on the basis of the positional relationship information acquired by the acquisition section (21), wherein
in the case where a group travel mode as a mode in which the straddle-type vehicle (100) travels with at least one other straddle-type vehicle (300) in a group is not valid, the acquisition section (21) acquires the positional relationship information in a first operation mode, and in the case where the group travel mode is valid, the acquisition section (21) acquires the positional relationship information in a second operation mode,
the partial area (P1, P2) that is subjected to acquisition of the surrounding environment information differs between the first operation mode and the second operation mode, and
output of the surrounding environment sensor (11) is processed in the first operation mode, output of a different surrounding environment sensor (11) from that in the first operation mode is processed in the second operation mode, and the surrounding environment information is thereby acquired.

2. The controller (20) according to claim 1, wherein
in the first operation mode and the second operation mode, output of the same surrounding environment sensor (11) is subjected to different processing, and the surrounding environment information is thereby acquired.

3. The controller (20) according to claim 1, wherein
in the second operation mode, compared to the first operation mode, the surrounding environment information is acquired on the basis of output of a large number of the surrounding environment sensors (11).

4. The controller (20) according to claim 3, wherein
the acquisition section (21) processes the output of the large number of the surrounding environment sensors (11) and determines whether the group travel mode is valid.

5. The controller (20) according to claim 3, wherein
the acquisition section (21) processes the output of the large number of the surrounding environment sensors (11) and acquires vehicle line information of the group, and
the execution section (22) executes the rider-assistance operation on the basis of the positional relationship information and the vehicle line information acquired by the acquisition section (21).

6. The controller (20) according to claim 1, wherein
the partial area (P2) that is subjected to the acquisition of the surrounding environment information in the second operation mode includes an area (P22) on a side of the straddle-type vehicle (100).

7. The controller (20) according to claim 6, wherein
in the second operation mode, the surrounding environment information of the area (P22) on the side is acquired on the basis of output of at least a first surrounding environment sensor (11x) and a second surrounding environment sensor (11y) as the surrounding environment sensors (11).

8. The controller (20) according to claim 7, wherein
compared to the second surrounding environment sensor (11y), a viewing angle of the first surrounding environment sensor (11x) is narrow, and a detectable distance of the first surrounding environment sensor (11x) is long.

9. The controller (20) according to claim 8, wherein
the execution section (22) executes a different rider-assistance operation between a case where the other straddle-type vehicle (300) is detected at least by the first surrounding environment sensor (11x) and a case where the other straddle-type vehicle (300) is not detected by the first surrounding environment sensor (11x) but the other straddle-type vehicle (300) is detected by the second surrounding environment sensor (11y).

10. The controller (20) according to claim 1, wherein
the target (200A) is the other straddle-type vehicle (300) that belongs to the same vehicle line (L1) as the straddle-type vehicle (100) in the group.

11. The controller (20) according to claim 1, wherein
the target (200B) is the other straddle-type vehicle (300) that belongs to a different vehicle line (L2) from the straddle-type vehicle (100) in the group.

12. The controller (20) according to claim 1, wherein
the target (200C) is an imaginary vehicle (300I) that represents plural other straddle-type vehicles (300) traveling with the straddle-type vehicle (100) in the group.

13. The controller (20) according to any one of claims 1 to 12, wherein
the execution section (22) executes, as the rider-assistance operation, positional relationship adjustment operation to automatically change a travel speed of the straddle-type vehicle (100) on the basis of the positional relationship information acquired by the acquisition section (21) and to thereby adjust a positional relationship between the straddle-type vehicle (100) and the target (200).

14. A control method for a straddle-type vehicle (100), the control method comprising:
an acquisition step (S101) in which an acquisition section (21) of a controller (20) acquires surrounding environment information of a partial area (P1, P2) in surroundings of the straddle-type vehicle (100) on the basis of output of at least one surrounding environment sensor (11) mounted to the straddle-type vehicle (100) and acquires positional relationship information between the traveling straddle-type vehicle (100) and a target (200) on the basis of the surrounding environment information; and
an execution step (S102) in which an execution section (22) of the controller (20) executes rider-assistance operation to assist with driving by a rider of the straddle-type vehicle (100) on the basis of the positional relationship information acquired in the acquisition step (S101), wherein
in the acquisition step (S101), in the case where a group travel mode as a mode in which the straddle-type vehicle (100) travels with at least one other straddle-type vehicle (300) in a group is not valid, the acquisition section (21) acquires the positional relationship information in a first operation mode, and in the case where the group travel mode is valid, the acquisition section (21) acquire the positional relationship information in a second operation mode,
the partial area (P1, P2) that is subjected to acquisition of the surrounding environment information differs between the first operation mode and the second operation mode, and
output of the surrounding environment sensor (11) is processed in the first operation mode, output of a different surrounding environment sensor (11) from that in the first operation mode is processed in the second operation mode, and the surrounding environment information is thereby acquired.

## Patentansprüche

1. Steuerung (20) für ein Spreizsitzfahrzeug (100), wobei die Steuerung (20) Folgendes umfasst:
einen Erfassungsabschnitt (21), der Umgebungsinformationen eines Teilbereichs (P1, P2) in der Umgebung des Spreizsitzfahrzeugs (100) auf Grundlage eines Ausgangs von mindestens einem Umgebungssensor (11), der an dem Spreizsitzfahrzeug (100) montiert ist, erfasst und Positionsbeziehungsinformationen zwischen dem fahrenden Spreizsitzfahrzeug (100) und einem Ziel (200) auf Grundlage der Umgebungsinformationen erfasst; und
einen Ausführungsabschnitt (22), der einen Fahrerassistenzvorgang ausführt, um das Fahren durch einen Fahrer des Spreizsitzfahrzeugs (100) auf Grundlage der durch den Erfassungsabschnitt (21) erfassten Positionsbeziehungsinformationen zu unterstützen, wobei
falls ein Gruppenfahrmodus als ein Modus, in dem das Spreizsitzfahrzeug (100) mit mindestens einem anderen Spreizsitzfahrzeug (300) in einer Gruppe fährt, nicht gültig ist, der Erfassungsabschnitt (21) die Positionsbeziehungsinformationen in einem ersten Betriebsmodus erfasst, und falls der Gruppenfahrmodus gültig ist, der Erfassungsabschnitt (21) die Positionsbeziehungsinformationen in einem zweiten Betriebsmodus erfasst,
sich der Teilbereich (P1, P2), der einer Erfassung der Umgebungsinformationen unterzogen wird, zwischen dem ersten Betriebsmodus und dem zweiten Betriebsmodus unterscheidet, und der Ausgang des Umgebungssensors (11) in dem ersten Betriebsmodus verarbeitet wird, der Ausgang eines anderen Umgebungssensors (11) als der in dem ersten Betriebsmodus in dem zweiten Betriebsmodus verarbeitet wird, und die Umgebungsinformationen dadurch erfasst werden.

2. Steuerung (20) nach Anspruch 1, wobei
in dem ersten Betriebsmodus und dem zweiten Betriebsmodus der Ausgang desselben Umgebungssensors (11) einer unterschiedlichen Verarbeitung unterzogen wird, und die Umgebungsinformationen dadurch erfasst werden.

3. Steuerung (20) nach Anspruch 1, wobei
in dem zweiten Betriebsmodus, im Vergleich zu dem ersten Betriebsmodus, die Umgebungsinformationen auf Grundlage eines Ausgangs einer großen Anzahl der Umgebungssensoren (11) erfasst werden.

4. Steuerung (20) nach Anspruch 3, wobei
der Erfassungsabschnitt (21) den Ausgang der großen Anzahl der Umgebungssensoren (11) verarbeitet und bestimmt, ob der Gruppenfahrmodus gültig ist.

5. Steuerung (20) nach Anspruch 3, wobei
der Erfassungsabschnitt (21) den Ausgang der großen Anzahl der Umgebungssensoren (11) verarbeitet und Fahrzeuglinieninformationen der Gruppe erfasst, und
der Ausführungsabschnitt (22) die Fahrerassistenzoperation auf Grundlage der Positionsbeziehungsinformationen und der durch den Erfassungsabschnitt (21) erfassten Fahrzeuglinieninformationen ausführt.

6. Steuerung (20) nach Anspruch 1, wobei
der Teilbereich (P2), der der Erfassung der Umgebungsinformationen in dem zweiten Betriebsmodus unterzogen wird, einen Bereich (P22) auf einer Seite des Spreizsitzfahrzeugs (100) umfasst.

7. Steuerung (20) nach Anspruch 6, wobei
in dem zweiten Betriebsmodus die Umgebungsinformationen des Bereichs (P22) auf der Seite auf Grundlage eines Ausgangs von mindestens einem ersten Umgebungssensor (11x) und einem zweiten Umgebungssensor (11y) als die Umgebungssensoren (11) erfasst werden.

8. Steuerung (20) nach Anspruch 7, wobei
im Vergleich zu dem zweiten Umgebungssensor (11y) ein Betrachtungswinkel des ersten Umgebungssensors (11x) eng ist und ein detektierbarer Abstand des ersten Umgebungssensors (11x) lang ist.

9. Steuerung (20) nach Anspruch 8, wobei
der Ausführungsabschnitt (22) zwischen einem Fall, in dem das andere Spreizsitzfahrzeug (300) zumindest durch den ersten Umgebungssensor (11x) detektiert wird, und einem Fall, in dem das andere Spreizsitzfahrzeug (300) nicht durch den ersten Umgebungssensor (11x) detektiert wird, sondern das andere Spreizsitzfahrzeug (300) durch den zweiten Umgebungssensor (11y) detektiert wird, eine andere Fahrerassistenzoperation ausführt.

10. Steuerung (20) nach Anspruch 1, wobei
das Ziel (200A) das andere Spreizsitzfahrzeug (300) ist, das zu derselben Fahrzeuglinie (L1) wie das Spreizsitzfahrzeug (100) in der Gruppe gehört.

11. Steuerung (20) nach Anspruch 1, wobei
das Ziel (200B) das andere Spreizsitzfahrzeug (300) ist, das zu einer anderen Fahrzeuglinie (L2) gehört als das Spreizsitzfahrzeug (100) in der Gruppe.

12. Steuerung (20) nach Anspruch 1, wobei
das Ziel (200C) ein imaginäres Fahrzeug (300I) ist, das mehrere andere Spreizsitzfahrzeuge (300) darstellt, die mit dem Spreizsitzfahrzeug (100) in der Gruppe fahren.

13. Steuerung (20) nach einem der Ansprüche 1 bis 12, wobei der Ausführungsabschnitt (22), als die Fahrerassistenzoperation, eine Positionsbeziehungsanpassungsoperation ausführt, um automatisch eine Fahrgeschwindigkeit des Spreizsitzfahrzeugs (100) auf der Grundlage der durch den Erfassungsabschnitt (21) erfassten Positionsbeziehungsinformationen zu ändern und dadurch eine Positionsbeziehung zwischen dem Spreizsitzfahrzeug (100) und dem Ziel (200) anzupassen.

14. Steuerverfahren für ein Spreizsitzfahrzeug (100), wobei das Steuerverfahren Folgendes umfasst:
einen Erfassungsschritt (S101), bei dem ein Erfassungsabschnitt (21) einer Steuerung (20) Umgebungsinformationen eines Teilbereichs (P1, P2) in der Umgebung des Spreizsitzfahrzeugs (100) auf Grundlage eines Ausgangs von mindestens einem Umgebungssensor (11), der an dem Spreizsitzfahrzeug (100) montiert ist, erfasst und Positionsbeziehungsinformationen zwischen dem fahrenden Spreizsitzfahrzeug (100) und einem Ziel (200) auf Grundlage der Umgebungsinformationen erfasst; und
einen Ausführungsschritt (S102), in dem ein Ausführungsabschnitt (22) der Steuerung (20) eine Fahrerassistenzoperation ausführt, um das Fahren durch einen Fahrer des Spreizsitzfahrzeugs (100) auf Grundlage der Positionsbeziehungsinformationen zu unterstützen, die in dem Erfassungsschritt (S101) erfasst werden, wobei
in dem Erfassungsschritt (S101), falls ein Gruppenfahrmodus als ein Modus, in dem das Spreizsitzfahrzeug (100) mit mindestens einem anderen Spreizsitzfahrzeug (300) in einer Gruppe fährt, nicht gültig ist, der Erfassungsabschnitt (21) die Positionsbeziehungsinformationen in einem ersten Betriebsmodus erfasst, und falls der Gruppenfahrmodus gültig ist, der Erfassungsabschnitt (21) die Positionsbeziehungsinformationen in einem zweiten Betriebsmodus erfasst,
sich der Teilbereich (P1, P2), der einer Erfassung der Umgebungsinformationen unterzogen wird, zwischen dem ersten Betriebsmodus und dem zweiten Betriebsmodus unterscheidet, und der Ausgang des Umgebungssensors (11) in dem ersten Betriebsmodus verarbeitet wird, der Ausgang eines anderen Umgebungssensors (11) als der in dem ersten Betriebsmodus in dem zweiten Betriebsmodus verarbeitet wird, und die Umgebungsinformationen dadurch erfasst werden.

## Revendications

1. Dispositif de commande (20) pour un véhicule à enfourcher (100), le dispositif de commande (20) comprenant :
une section d'acquisition (21) qui acquiert des informations d'environnement ambiant d'une zone partielle (P1, P2) dans l'environnement du véhicule à enfourcher (100) sur la base de la sortie d'au moins un capteur d'environnement ambiant (11) monté sur le véhicule à enfourcher (100) et acquiert des informations de relation de position entre le véhicule à enfourcher (100) en déplacement et une cible (200) sur la base des informations d'environnement ambiant ; et
une section d'exécution (22) qui exécute une opération d'assistance au conducteur pour assister la conduite par un conducteur du véhicule à enfourcher (100) sur la base des informations de relation de position acquises par la section d'acquisition (21), dans lequel
dans le cas où un mode de circulation en groupe en tant que mode dans lequel le véhicule à enfourcher (100) se déplace avec au moins un autre véhicule à enfourcher (300) dans un groupe n'est pas valide, la section d'acquisition (21) acquiert les informations de relation de position dans un premier mode de fonctionnement, et dans le cas où le mode de circulation en groupe est valide, la section d'acquisition (21) acquiert les informations de relation de position dans un second mode de fonctionnement,
la zone partielle (P1, P2) qui est soumise à l'acquisition des informations d'environnement ambiant diffère entre le premier mode de fonctionnement et le second mode de fonctionnement, et
la sortie du capteur d'environnement ambiant (11) est traitée dans le premier mode de fonctionnement, la sortie d'un capteur d'environnement ambiant (11) différent de celui du premier mode de fonctionnement est traitée dans le second mode de fonctionnement, et les informations d'environnement ambiant sont ainsi acquises.

2. Dispositif de commande (20) selon la revendication 1, dans lequel
dans le premier mode de fonctionnement et le second mode de fonctionnement, la sortie du même capteur d'environnement ambiant (11) est soumise à un traitement différent, et les informations d'environnement ambiant sont ainsi acquises.

3. Dispositif de commande (20) selon la revendication 1, dans lequel
dans le second mode de fonctionnement, par rapport au premier mode de fonctionnement, les informations d'environnement ambiant sont acquises sur la base de la sortie d'un grand nombre de capteurs d'environnement ambiant (11).

4. Dispositif de commande (20) selon la revendication 3, dans lequel
la section d'acquisition (21) traite la sortie du grand nombre de capteurs d'environnement ambiant (11) et détermine si le mode de circulation en groupe est valide.

5. Dispositif de commande (20) selon la revendication 3, dans lequel
la section d'acquisition (21) traite la sortie du grand nombre de capteurs d'environnement ambiant (11) et acquiert des informations de file de véhicules du groupe, et
la section d'exécution (22) exécute l'opération d'assistance au conducteur sur la base des informations de relation de position et des informations de file de véhicules acquises par la section d'acquisition (21).

6. Dispositif de commande (20) selon la revendication 1, dans lequel
la zone partielle (P2) qui est soumise à l'acquisition des informations d'environnement ambiant dans le second mode de fonctionnement inclut une zone (P22) sur un côté du véhicule à enfourcher (100).

7. Dispositif de commande (20) selon la revendication 6, dans lequel
dans le second mode de fonctionnement, les informations d'environnement ambiant de la zone (P22) sur le côté sont acquises sur la base de la sortie d'au moins un premier capteur d'environnement ambiant (11x) et d'un second capteur d'environnement ambiant (11y) en tant que capteurs d'environnement ambiant (11).

8. Dispositif de commande (20) selon la revendication 7, dans lequel
par rapport au second capteur d'environnement ambiant (11y), un angle de visualisation du premier capteur d'environnement ambiant (11x) est étroit, et une distance détectable du premier capteur d'environnement ambiant (11x) est longue.

9. Dispositif de commande (20) selon la revendication 8, dans lequel
la section d'exécution (22) exécute une opération d'assistance au conducteur différente entre un cas où l'autre véhicule à enfourcher (300) est détecté au moins par le premier capteur d'environnement ambiant (11x) et un cas où l'autre véhicule à enfourcher (300) n'est pas détecté par le premier capteur d'environnement ambiant (11x) mais l'autre véhicule à enfourcher (300) est détecté par le second capteur d'environnement ambiant (11y).

10. Dispositif de commande (20) selon la revendication 1, dans lequel
la cible (200A) est l'autre véhicule à enfourcher (300) qui appartient à la même file de véhicules (L1) que le véhicule à enfourcher (100) dans le groupe.

11. Dispositif de commande (20) selon la revendication 1, dans lequel
la cible (200B) est l'autre véhicule à enfourcher (300) qui appartient à une file de véhicules (L2) différente de celle du véhicule à enfourcher (100) dans le groupe.

12. Dispositif de commande (20) selon la revendication 1, dans lequel
la cible (200C) est un véhicule imaginaire (300I) qui représente plusieurs autres véhicules à enfourcher (300) se déplaçant avec le véhicule à enfourcher (100) dans le groupe.

13. Dispositif de commande (20) selon l'une quelconque des revendications 1 à 12, dans lequel
la section d'exécution (22) exécute, en tant qu'opération d'assistance au conducteur, une opération d'ajustement de relation de position pour modifier automatiquement une vitesse de déplacement du véhicule à enfourcher (100) sur la base des informations de relation de position acquises par la section d'acquisition (21) et pour ajuster ainsi une relation de position entre le véhicule à enfourcher (100) et la cible (200).

14. Procédé de commande pour un véhicule à enfourcher (100), le procédé de commande comprenant :
une étape d'acquisition (S101) dans laquelle une section d'acquisition (21) d'un dispositif de commande (20) acquiert des informations d'environnement ambiant d'une zone partielle (P1, P2) dans l'environnement du véhicule à enfourcher (100) sur la base de la sortie d'au moins un capteur d'environnement ambiant (11) monté sur le véhicule à enfourcher (100) et acquiert des informations de relation de position entre le véhicule à enfourcher (100) en déplacement et une cible (200) sur la base des informations d'environnement ambiant ; et
une étape d'exécution (S102) dans laquelle une section d'exécution (22) du dispositif de commande (20) exécute une opération d'assistance au conducteur pour assister la conduite par un conducteur du véhicule à enfourcher (100) sur la base des informations de relation de position acquises lors de l'étape d'acquisition (S101), dans lequel
lors de l'étape d'acquisition (S101), dans le cas où un mode de circulation en groupe en tant que mode dans lequel le véhicule à enfourcher (100) se déplace avec au moins un autre véhicule à enfourcher (300) dans un groupe n'est pas valide, la section d'acquisition (21) acquiert les informations de relation de position dans un premier mode de fonctionnement, et dans le cas où le mode de circulation en groupe est valide, la section d'acquisition (21) acquiert les informations de relation de position dans un second mode de fonctionnement,
la zone partielle (P1, P2) qui est soumise à l'acquisition des informations d'environnement ambiant diffère entre le premier mode de fonctionnement et le second mode de fonctionnement, et
la sortie du capteur d'environnement ambiant (11) est traitée dans le premier mode de fonctionnement, la sortie d'un capteur d'environnement ambiant (11) différent de celui du premier mode de fonctionnement est traitée dans le second mode de fonctionnement, et les informations d'environnement ambiant sont ainsi acquises.
